# EUROPÄISCHE PATENTSCHRIFT

(11) **EP 1 299 197 B1**
(45) Veröffentlichungstag und Bekanntmachung des Hinweises auf die Patenterteilung: **23.11.2005**
(21) Anmeldenummer: 01953884.2
(22) Anmeldetag: 05.07.2001
(51) Int. Cl.: B06B 1/04, G01N 29/24

(54) **ELEKTROMAGNETISCHER ULTRASCHALLWANDLER**
ELECTROMAGNETIC ULTRASONIC TRANSDUCER
TRANSDUCTEUR ULTRASONORE ELECTROMAGNETIQUE

(30) Priorität: 07.07.2000 DE 10033228
(43) Veröffentlichungstag der Anmeldung: 09.04.2003
(73) Patentinhaber: Fraunhofer-Gesellschaft zur Förderung der angewandten Forschung e.V., 80686 München (DE)
(72) Erfinder: HÜBSCHEN, Gerhard, 66740 Saarlouis (DE)
(74) Vertreter: Gagel, Roland
(86) Internationale Anmeldenummer: PCT/DE2001/002544
(87) Internationale Veröffentlichungsnummer: WO 2002/004135

(56) Entgegenhaltungen:
- DE-A- 3 637 366
- US-A- 5 608 164

## Beschreibung

Die vorliegende Erfindung betrifft einen elektromagnetischen Ultraschallwandler zur Beaufschlagung eines Werkstückes aus elektrisch leitendem Material mit Ultraschallwellen oder zum Empfang von Ultraschallwellen, mit einem Spulenträger aus einem magnetisch gut leitenden Material, der eine kammartige Struktur mit parallel verlaufenden Nuten und Stegen aufweist, und mehreren in Reihe elektrisch miteinander verbundenen HF-Spulen, die beabstandet von einer durch Stirnseiten der Stege gebildeten Abstrahlungsseite des Wandlers derart auf zumindest einige der Stege aufgewickelt sind, dass benachbarte Spulen einen alternierenden Wicklungssinn aufweisen. Der Ultraschallwandler weist weiterhin Mittel zur Erzeugung eines statischen magnetischen Feldes auf.

Beim Einsatz derartiger Wandler, beispielsweise zur zerstörungsfreien Prüfung von elektrisch leitfähigen oder ferromagnetischen Werkstücken auf Innen- und Oberflächenfehler, wird der Wandler mit seiner Abstrahlungsseite in die Nähe der Oberfläche des zu untersuchenden Werkstückes gebracht. Durch die Beaufschlagung der HF-Spulen des Wandlers mit einem hochfrequenten Strom werden im Werkstück Wirbelströme induziert, die unter der Einwirkung des Magnetfeldes zur Ausbreitung von Ultraschallwellen im Werkstück führen. In gleicher Weise können an Fehlstellen im Werkstück reflektierte Ultraschallwellen von einem derartigen Wandler empfangen und in hochfrequente Stromimpulse umgesetzt werden. Dies kann mit den gleichen HF-Spulen oder mit einem getrennten Spulensatz erfolgen. Durch die berührungslose Erzeugung von Ultraschallwellen im Werkstück bieten derartige Wandler besondere Vorteile bei der Prüfung von bewegten Werkstücken.

### Stand der Technik

Bei den bekannten Ausführungsformen elektromagnetischer Ultraschallwandler wird zwischen Wandlern unterschieden, die in Einfallsebene polarisierte Transversalwellen, so genannte SV-Wellen (shearvertical), anregen und Wandlern, die horizontal polarisierte Transversalwellen, so genannte SH-Wellen (shear-horizontal), im Werkstück anregen oder vom Werkstück empfangen. Die Art der Anregung unterscheidet sich in beiden Fällen im Wesentlichen durch die Art und Richtung des Magnetfeldes, das auf die durch die HF-Spulen induzierten Wirbelströme einwirkt.

So ist aus der DE 36 37 366 A1 ein elektromagnetischer Ultraschallwandler zur Anregung von vertikal polarisierten Transversalwellen (SV-Wellen) bekannt, der einen Spulenträger mit kammartiger Struktur mit parallel verlaufenden Nuten und Stegen aufweist, auf die mehrere elektrisch in Reihe miteinander verbundene HF-Spulen mit alternierendem Wicklungssinn aufgewickelt sind. Durch Einhaltung eines Mindestabstandes zwischen den Spulenwicklungen und den die Abstrahlungsseite des Wandlers bildenden Stirnseiten der Stege werden die HF-Spulen vor einer Beschädigung durch Berührung mit dem zu prüfenden Werkstück geschützt. Zur Erzeugung des erforderlichen Magnetfeldes ist über dem kammförmigen Spulenträger ein Permanent- oder Elektromagnet angeordnet, der ein homogenes statisches Magnetfeld im Bereich der Werkstückoberfläche liefert.
Die Spurwellenlänge eines derartigen elektromagnetischen Ultraschallwandlers wird durch den Abstand zwischen den einzelnen Stegen der Kammstruktur und die Wicklungsart der HF-Spulen bestimmt. Die halbe Spurwellenlänge entspricht hierbei dem Abstand zwischen benachbarten Stegen. Die Schallabstrahlung erfolgt senkrecht zu den Stegen des Spulenträgers.

Die DE 36 37 366 A1 offenbart auch eine Ausführungsform eines Ultraschallwandlers, bei der das erzeugte Magnetfeld parallel zur Längsseite der Stege sowie parallel zur Oberfläche des Werkstückes gerichtet ist, um senkrecht zur Einfallsebene polarisierte Transversalwellen (SH-Wellen) zu erzeugen. In einem derartigen Fall erfolgt die Anregung der Ultraschallwellen im Werkstück über einen reinen Magnetostriktions-Mechanismus. Das Magnetfeld ist hierbei parallel zu den im Werkstück induzierten Wirbelströmen ausgerichtet. Der Nachteil dieser Anregungstechnik besteht jedoch darin, dass die Anregungseffektivität und Empfangsamplitude sehr stark von den mechanischen und metallurgischen Eigenschaften der Werkstückoberfläche abhängig sind. Weiterhin erfordert diese Art der Anregung ein Werkstück aus ferromagnetischem Material.

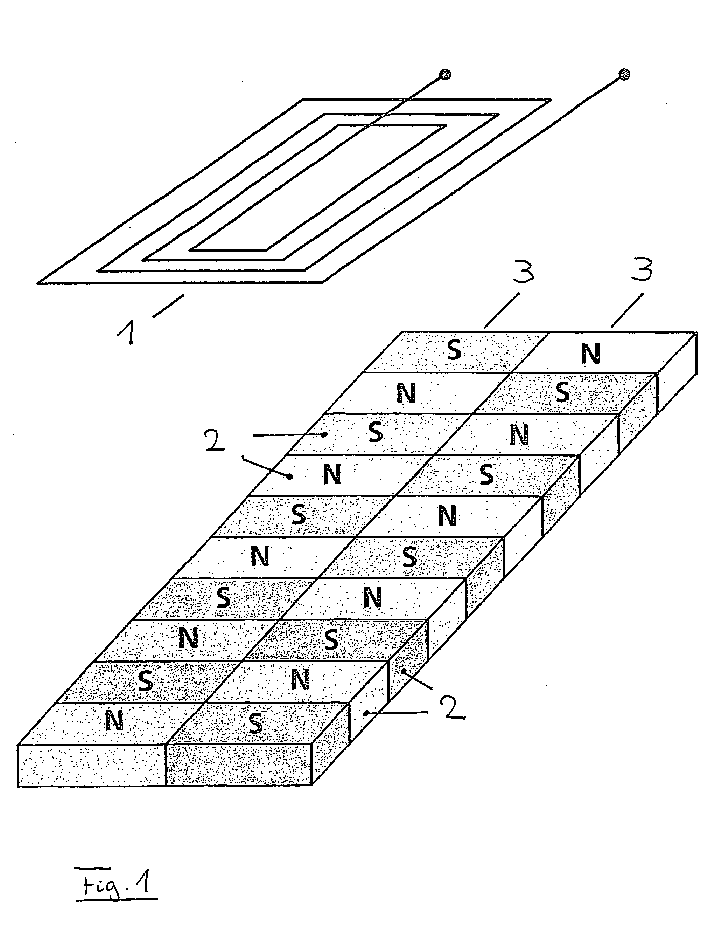

Zur Vermeidung dieser Problematik werden zur elektromagnetischen Ultraschallanregung von horizontal polarisierten Transversalwellen (SH-Wellen) Wandler mit periodischer Permanentmagnetanordnung eingesetzt, bei denen das Magnetfeld im Wesentlichen senkrecht zur Werkstückoberfläche gerichtet ist. Bekannte Wandler bestehen aus zwei Reihen von Permanentmagneten, auf die an deren Abstrahlungsseite eine Rechteckspule gewickelt ist. Eine derartige Anordnung, wie sie beispielsweise in Fig. 1 schematisch dargestellt ist, erzeugt in elektrisch leitfähigen Werkstückmaterialien - bei Beaufschlagung der Spulen mit HF-Strömen - aufgrund der durch das Magnetfeld auf die in der Werkstückoberfläche induzierten Wirbelströme einwirkende Lorentzkraft Teilchenauslenkungen, die zur Anregung von SH-Wellen im Werkstück führen.

Eine Weiterbildung eines derartigen Wandlers zur Anregung von senkrecht zur Einfallsebene polarisierten Transversalwellen ist in der EP 0 609 754 A2 gezeigt. Bei dieser Ausführungsform sind mindestens vier Reihen von alternierenden Permanentmagnetsegmenten vorgesehen, wobei zwei benachbarte Reihen jeweils um ein Viertel der Periodizität der einzelnen Permanentmagnete jeder Reihe entlang ihrer Längsachse verschoben sind. Für jeweils benachbarte Permanentmagnetanordnungen ist eine eigene Hochfrequenzspule vorgesehen, die mit einem zwischen den beiden Hochfrequenzspulen um 90° verschobenen HF-Signal beaufschlagbar sind. Auf diese Weise wird erreicht, dass dieser Ultraschallwandler sowohl als Sendewandler als auch als Empfangswandler eine einseitige Richtcharakteristik mit einer einzigen Hauptabstrahlrichtung aufweist, so dass sich bei der zerstörungsfreien Werkstoffprüfung ein verbessertes Signal/Rausch-Verhältnis ergibt.

Beim Einsatz von derartigen elektromagnetischen Ultraschallwandlern liegen jedoch die empfindlichen Spulendrähte zwischen den Permanentmagneten und der Werkstückoberfläche. Da die Spulen bei der Werkstückprüfung sehr nahe an die Werkstückoberfläche gebracht werden müssen, um die für einen ausreichenden Signal/Rausch-Abstand erforderlichen Ultraschallamplituden zu erzeugen, besteht eine erhöhte Beschädigungs- und Verschleißgefahr der HF-Spulen. Ein wirksamer Verschleißschutz der Spulen lässt sich bei diesen Wandlern nur schwer realisieren, da eventuelle Schutzabdeckungen wiederum zu einer unerwünschten Dämpfung der Amplituden führen.

Aus der DE 42 23 470 ist ein weiterer elektromagnetischer Ultraschallwandler zur Erzeugung höherfrequenter SH-Wellen bekannt. Dieser Wandler besteht aus einem Ringbandkern, auf den die Wicklungen der HF-Spule von den Stirnseiten entfernt, d.h. beabstandet von der Werkstückoberfläche, angeordnet sind. Dies verringert die Gefahr der Beschädigung oder eines Verschleißes der Wicklungen beim Einsatz des Wandlers. Dieses Prinzip mit Ringbandkern ist jedoch nicht für den Aufbau von niederfrequenten SH-Wellen-Wandlern mit großen Aperturbreiten geeignet, da nur geringe Anregungseffektivitäten erreicht werden können.

Ausgehend von diesem Stand der Technik besteht die Aufgabe der vorliegenden Erfindung darin, einen elektromagnetischen Ultraschallwandler zur Anregung von horizontal polarisierten Transversalwellen (SH-Wellen) anzugeben, der insbesondere auch für den niederfrequenten SH-Wellen-Bereich geeignet ist und die Werkstückprüfung von elektrisch leitfähigen Materialien bei geringer Verschleißgefahr für die HF-Spulen ermöglicht.

### Darstellung der Erfindung

Die Aufgabe wird mit dem elektromagnetischen Ultraschallwandler gemäß Patentanspruch 1 gelöst. Vorteilhafte Ausgestaltungen des elektromagnetischen Ultraschallwandlers sind Gegenstand der Unteransprüche.

Der vorliegende Ultraschallwandler besteht aus einem Spulenträger aus einem magnetisch gut leitenden, d.h. hochpermeablen, Material, der eine kammartige Struktur mit zumindest annähernd parallel verlaufenden Nuten und Stegen aufweist, sowie mehreren in Reihe elektrisch miteinander verbundenen HF-Spulen, die beabstandet von einer durch Stirnseiten der Stege gebildeten Abstrahlungsseite des Wandlers derart auf zumindest einige der Stege aufgewickelt sind, dass benachbarte Spulen einen alternierenden Wicklungssinn aufweisen. Die Abstrahlungsseite entspricht bei diesem Wandler, wie auch bei den bekannten Wandlern des eingangs genannten Standes der Technik, der dem Werkstück bei der Werkstückprüfung zugewandten Unterseite des Wandlers. Der Wandler umfasst weiterhin mehrere Reihen von Permanentmagneten, die in den Nuten des Wandlers in Längsrichtung der Stege angeordnet sind und eine alternierende Polbelegung aufweisen.

Der vorliegende elektromagnetische Ultraschallwandler, im Folgenden auch als elektromagnetischer SH-Wellen-Wandler bezeichnet, eignet sich insbesondere für die Ultraschallprüfung elektrisch leitfähiger oder ferromagnetischer Materialien. Durch die spezielle Gestaltung des Kernmaterials, d.h. des Spulenträgers, und die entsprechende Anordnung der Permanentmagnete werden die hoch empfindlichen Drähte der HF-Spulen von der Oberfläche des zu prüfenden Werkstücks um einige mm abgehoben. Der Abstand zwischen den Spulenwicklungen und der Stirnseite der Stege, die die Unterseite bzw. Abstrahlungsseite des Wandlers bilden, beträgt dabei vorzugsweise ca. 6 bis 8 mm. Dadurch wird der Nachteil vermieden, dass die empfindlichen HF-Spulen sehr nahe an der Werkstückoberfläche angeordnet werden müssen, so dass sich ein wirksamer Verschleißschutz für den Wandler ergibt. Der vorliegende Wandler lässt sich insbesondere zur Anregung von niederfrequenten SH-Wellen einsetzen.

Die Spurwellenlänge des vorliegenden Wandlers wird im Gegensatz zu der Spurwellenlänge des Wandlers der DE 36 37 366 A1 nicht durch den Abstand zwischen zwei benachbarten Stegen des Spulenträgers, sondern durch die Periodizität der Magnetanordnung, d.h. durch den (Schwerpunkts-)Abstand bzw. die Länge der einzelnen Permanentmagnete einer Permanentmagnetreihe bestimmt, wobei unter Länge die Dimension in Längsrichtung der Stege zu verstehen ist. Die Spurwellenlänge und damit auch die Periodizität des Wandlers ist damit parallel zu den Nuten bzw. Stegen des Spulenträgers orientiert.
Die HF-Spulen selbst sind beim vorliegenden Wandler um die einzelnen Stege gewickelt, wobei die Wicklungsrichtung der HF-Spulen benachbarter Stege alterniert. Durch die elektrische Verbindung dieser Spulen ergibt sich über die gesamte Abstrahlfläche des Wandlers ein Verlauf der Spulenanordnung, der im eingangs genannten Stand der Technik auch als mäanderförmig bezeichnet wird.

Durch die elektrisch in Reihe miteinander verbundenen HF-Spulen der einzelnen Stege werden dem Material des zu prüfenden Werkstückes dynamische Magnetfelder eingeprägt, die dort Wirbelströme hervorrufen. Die Wirbelströme verlaufen beim vorliegenden Wandler im Wesentlichen unter den in der Polbelegung alternierenden Permanentmagneten in Richtung der Nuten des Kammes. Durch die Permanentmagnete wird ein im Wesentlichen senkrecht zur Werkstückoberfläche orientiertes räumlich periodisches Magnetfeld erzeugt. Die Stromrichtung verläuft in benachbarten Nuten gegenläufig. Durch die Ladungsbewegung senkrecht zum Magnetfeld wirken Lorentzkräfte, die zu Teilchenauslenkungen an der Werkstückoberfläche und damit zur Abstrahlung von horizontal polarisierten Transversalwellen in Richtung der Nuten des kammförmigen Spulenträgers führen. In einer bevorzugten Ausführungsform, bei der die Polbelegung der Permanentmagnete in benachbarten Nuten wechselt, wirken dabei gleichgerichtete Lorentzkräfte quer zu der Nut- und Stegrichtung.

Im Gegensatz zu dem Wandler der DE 36 37 366 A1 ist die Schallabstrahlrichtung beim vorliegenden Wandler daher parallel zu den Stegen bzw. Nuten der Kammstruktur orientiert. Weiterhin beruht der vorliegende Wandler auf dem Lorentzprinzip, während der Wandler der DE 36 37 366 A1 im Betrieb als SH-Wellenwandler über einen reinen Magnetostriktionsmechanismus wirkt. Durch Nutzung der Lorentzkräfte bei der Erzeugung von Ultraschallwellen mit dem vorliegenden Wandler ist die Ultraschall-Anregung wesentlich geringer von den Werkstoffeigenschaften abhängig als bei dem SH-Wellen-Wandler der DE 36 37 366 A1. Weiterhin lassen sich mit dem vorliegenden Wandler nicht nur ferromagnetische, sondern auch alle anderen elektrisch leitfähigen Materialien prüfen.

Selbstverständlich lässt sich der vorliegende Wandler nicht nur als Sendewandler, bei dem die HF-Spulen mit einem HF-Strom eines Hochfrequenzgenerators gespeist werden, betreiben. Der Wandler ist vielmehr auch dazu geeignet, mit dem gleichen Spulensystem in umgekehrter Richtung Ultraschallwellen im Werkstück zu empfangen und über die HF-Spulen die entsprechenden Hochfrequenz-Signale an eine Auswerteeinheit weiterzuleiten. In gleicher Weise können auch unterschiedliche Spulensysteme für das Senden und den Empfang der Ultraschallwellen auf dem gleichen kammförmigen Träger vorgesehen sein. Vorzugsweise weisen die HF-Spulen für den Empfang in letztgenanntem Fall in etwa die doppelte Zahl an Spulenwindungen auf wie die HF-Spulen für die Erzeugung der Ultraschallwellen.

Auf weitere Einzelheiten zur Erzeugung und zum Empfang von Ultraschallwellen mit einem derartigen elektromagnetischen Ultraschallwandler, auch als elektrodynamischer Ultraschallwandler bekannt, wird hier nicht eingegangen, da diese dem Fachmann beispielsweise aus der die DE 36 37 366 A1 oder der EP 0 609 754 A2 bekannt sind.

In einer Ausführungsform des vorliegenden Ultraschallwandlers, bei der die Permanentmagnete der Permanentmagnetreihen benachbarter Nuten jeweils auf gleicher Höhe, d.h. in gleichem Abstand zu einer Linie senkrecht zu den Nuten bzw. Stegen angeordnet sind, wird eine zweiseitige Schallabstrahlung realisiert, die für bestimmte Anwendungsfälle von Nutzen sein kann. Durch eine besondere Anordnung der Permanentmagnete bzw. Permanentmagnetreihen kann jedoch auch eine einseitige Schallabstrahlung erreicht werden. Eine derartige einseitige Schallabstrahlung wird durch einen erfindungsgemäßen Ultraschallwandler realisiert, bei dem benachbarte Permanentmagnetreihen jeweils um eine halbe Magnetbreite in Bezug auf eine senkrecht zur Nut verlaufende Grundlinie verschoben angeordnet sind. Zusätzlich werden zwei getrennte HF-Spulenanordnungen verwendet, mit denen jeweils eine Hälfte der Stege des Spulenträgers beaufschlagt ist. Da die Permanentmagnete benachbarter Nuten bei dieser Ausführungsform räumlich um λ/4 der Spurwellenlänge zueinander versetzt sind, ergibt sich in einer Abstrahl- bzw. Empfangsrichtung des Wandlers eine Phasendifferenz der Signale um 180°, d.h. Auslöschung der Signale, und in der anderen Abstrahlrichtung eine konstruktive Überlagerung. Dies führt zu einer einseitigen Abstrahlcharakteristik bzw. Empfangscharakteristik des Wandlers.

In einer weiteren vorteilhaften Ausführungsform des vorliegenden Wandlers wird eine Hälfte der Stege mit einer Spulenanordnung, die andere Hälfte mit einer davon getrennt ansteuerbaren Spulenanordnung umwickelt. Die Permanentmagnete in jeder der Nuten einer Spulenanordnung sind in Richtung senkrecht zu den Nuten alternierend gepolt. Das Gleiche gilt für die Permanentmagnete der anderen Spulenanordnung, wobei in der Mitte des Spulenträgers jedoch zwei benachbarte Magnetreihen - in einer Richtung senkrecht zu den Nuten - die gleiche Polbelegung aufweisen. Beide Spulenanordnungen werden an die Eingänge eines Differenzverstärkers angeschlossen, wobei die Empfangssignale der Spulen eine Phasendifferenz von 180° besitzen. Auf diese Weise wird ein Empfangswandler in Differenztechnik realisiert.

Die Anzahl der Stege und Nuten des Spulenträgers des vorliegenden Ultraschallwandlers kann beliebig gewählt werden. Es sollten jedoch mindestens drei Stege vorgesehen sein, so dass zwei Reihen von Permanentmagneten in zueinander parallelen Nuten angeordnet werden. Bei einer Ausführungsform zur Erzeugung einer einseitigen Richtcharakteristik sollten zumindest fünf vorhanden sein, so dass sich vier parallel zueinander verlaufende Permanentmagnetreihen ergeben. Das Material des Spulenträgers sollte magnetisch gut leitend, d.h. hochpermeabel, und elektrisch schlecht leitend sein. Die Breite der Stege kann hierbei in etwa der Breite der Permanentmagnetreihen entsprechen. Das Gleiche gilt für die Höhe der Stege. Selbstverständlich kann jedoch auch die Höhe der Permanentmagnete etwas geringer oder etwas größer als die Höhe der Stege ausfallen, solange die Erzeugung von Ultraschallwellen im Werkstück über Lorentzkräfte noch gewährleistet ist. Durch die Länge der einzelnen Permanentmagnete wird die Spurwellenlänge des Ultraschallwandlers festgelegt, so dass die Länge dieser Magnete je nach gewünschter Spurwellenlänge vom Fachmann geeignet festgelegt wird. Die Fläche, über die sich die Stege sowie die in den Nuten angeordneten Permanentmagnete erstrecken, bestimmt die Aperturbreite des Wandlers und wird ebenfalls je nach beabsichtigter Anwendung geeignet gewählt.

Selbstverständlich ist die geometrische Form der Stege und Nuten nicht auf eine rechteckförmige Querschnittsform festgelegt. Die Form dieser Stege und Nuten kann vielmehr auch von der rechteckigen Querschnittsform abweichen, ohne die erfindungsgemäße Funktion des vorliegenden Wandlers zu beeinträchtigen. Die auf die Stege aufgewickelten Spulenwindungen sind vorzugsweise mit einer Isolationsschicht versehen, um einen elektrischen Kurzschluss zu vermeiden.

### Kurze Beschreibung der Zeichnungen

Der vorliegende elektromagnetische Ultraschallwandler wird nachfolgend ohne Beschränkung des allgemeinen Erfindungsgedankens anhand von Ausführungsbeispielen in Verbindung mit den Zeichnungen nochmals kurz erläutert. Hierbei zeigen:
- Fig. 1: ein Beispiel für einen elektromagnetischen Ultraschallwandler zur Erzeugung von horizontal polarisierten Transversalwellen gemäß dem Stand der Technik;
- Fig. 2: ein erstes Ausführungsbeispiel eines elektromagnetischen Ultraschallwandlers gemäß der vorliegenden Erfindung;
- Fig. 3: das Wicklungsschema des Ultraschallwandlers der Fig. 2;
- Fig. 4: ein zweites Ausführungsbeispiel für einen elektromagnetischen Ultraschallwandler gemäß der vorliegenden Erfindung;
- Fig. 5: das Wicklungsschema des Ultraschallwandlers der Fig. 4;
- Fig. 6: ein drittes Ausführungsbeispiel für einen elektromagnetischen Ultraschallwandler gemäß der vorliegenden Erfindung; und
- Fig. 7: ein viertes Ausführungsbeispiel für einen elektromagnetischen Ultraschallwandler gemäß der vorliegenden Erfindung.

### Wege zur Ausführung der Erfindung

Fig. 1 zeigt ein Beispiel für einen elektromagnetischen Ultraschallwandler zur Ultraschallanregung von horizontal polarisierten Transversalwellen (SH-Wellen) gemäß dem Stand der Technik. Bei diesem Wandler besteht die Magnetanordnung aus zwei Reihen von Permanentmagneten 2, deren Polbelegung sowohl in Richtung der Permanentmagnetreihe 3 als auch senkrecht zu dieser Richtung alterniert. An der Unterseite dieser Permanentmagnetanordnung ist eine als Rechteckspule ausgebildete HF-Spule 1 angeordnet, die in der Figur zur besseren Darstellung räumlich getrennt von den Permanentmagneten 2 skizziert ist. Bei Beaufschlagung dieser HF-Spule 1 mit HF-Strömen werden unter der Einwirkung des durch die Permanentmagneten 2 hervorgerufenen Magnetfeldes in elektrisch leitfähigen Materialien durch Lorentzkräfte Teilchenauslenkungen hervorgerufen, die zur Anregung von SH-Wellen im Werkstück führen. Zur Erzeugung einer ausreichend hohen Amplitude dieser Ultraschallwellen muss jedoch der elektromagnetische Ultraschallwandler sehr nahe mit der in der Figur gezeigten Unterseite an die Werkstückoberfläche gebracht werden. Bei einem derartigen Wandler besteht somit die Gefahr der Beschädigung der an der Unterseite angeordneten HF-Spule 1 bei der Werkstückprüfung.

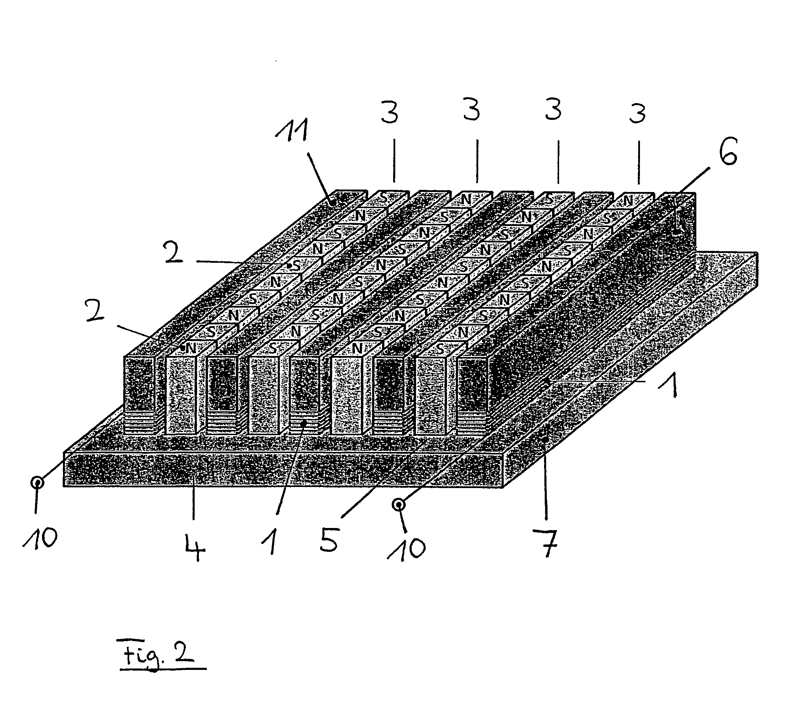

Zur Vermeidung dieser Problematik wird der vorliegende Ultraschallwandler vorgeschlagen, der in einem Ausführungsbeispiel in Fig. 2 dargestellt ist. Fig. 2 zeigt wiederum eine Draufsicht auf die Unterseite bzw. Abstrahlungsseite eines derartigen elektromagnetischen Ultraschallwandlers. Der Ultraschallwandler setzt sich in diesem Beispiel aus einem Spulenträger 4 mit fünf parallel zueinander verlaufenden Stegen 6 mit dazwischen liegenden Nuten 5 zusammen, die auf einer Grundplatte 7 angeordnet sind. Der Spulenträger 4 besteht hierbei aus einem ferromagnetischen Material. Der Wandler weist weiterhin fünf in Reihe elektrisch miteinander verbundene HF-Spulen 1 auf. Jede der Spulen 1 ist auf einen der Stege 6 aufgewickelt, wie dies in der Figur zu erkennen ist. Die Wicklungsrichtung der Spulen 1 alterniert von Spule zu Spule bzw. von Steg zu Steg, so dass die Stromrichtung der durch die Spulenwicklungen fließenden Ströme von Nut zu Nut alterniert. Beim Betrieb dieses Wandlers werden die beiden in der Figur dargestellten Anschlüsse 10 der HF-Spulenanordnung mit einem Hochfrequenzgenerator verbunden, der die HF-Spulen 1 mit elektrischen Hochfrequenzimpulsen beaufschlagt. Im Empfangsfall werden diese Anschlüsse 10 mit einer Auswerteeinrichtung verbunden, die die über die HF-Spulen 1 empfangenen Signale auswertet.

Bei dem vorliegenden Ultraschallwandler sind in den durch die Nuten 5 gebildeten Zwischenräumen zwischen den parallel verlaufenden Stegen 6 jeweils kleine Permanentmagnete 2 mit alternierender Polbelegung nebeneinander angeordnet, so dass in jeder Nut 5 eine Permanentmagnetreihe 3 gebildet wird. Die Polbelegung alterniert dabei sowohl innerhalb der einzelnen Nuten 5 als auch - senkrecht zu der Längserstreckung der Stege 6 - von Nut zu Nut. Dies ist aus der Fig. 2 deutlich ersichtlich. Weiterhin ist erkennbar, dass die Spulenwicklungen der HF-Spulen 1 beabstandet von der Stirnseite der Stege 6 bzw. der Unterseite des Wandlers auf die Stege 6 aufgewickelt sind. Dadurch wird der Nachteil vermieden, dass die empfindlichen HF-Spulen 1 sehr nahe an der zu prüfenden Werkstückoberfläche angeordnet werden müssen. Sie werden vielmehr durch die Stege 6 selbst bzw. durch die Permanentmagnete 2 geschützt.

Die Magnetreihenbreite beträgt bei dem Wandler der vorliegenden Erfindung unabhängig von der vorliegenden Ausführungsform vorzugsweise 2 bis 3 mm. Bei einer Beaufschlagung der HF-Spulenanordnung mit einer Frequenz des HF-Generators von beispielsweise 1,4 MHz kann ein Abstrahlungswinkel von etwa 55° zur durch die Unterseite des Wandlers gebildeten Ebene erreicht werden. Bei einer Veränderung der Frequenz des Speisesignals bis hinab zu 1 MHz kann der Abstrahlungswinkel des Ultraschallsignals bis hin zu einer streifenden Abschallung verschoben werden. Die Höhe der Stege 6 bzw. Permanentmagnetreihen 3 liegt vorzugsweise zwischen 6 und 10 mm, wobei die Spulenwicklungen der HF-Spulen 1 vorzugsweise etwa 6 bis 8 mm von der Stirnseite 11 der Stege beabstandet sind. Die Breite der Nuten 5 zwischen den einzelnen Stegen 6 sowie die Breite der Stege 6 kann beispielsweise in einem Bereich zwischen 4 und 10 mm liegen. Diese beispielhaft angegebenen Dimensionen gelten für alle Ausführungsformen des erfindungsgemäßen Wandlers.

Der beispielhaft in der Figur dargestellte Wandler eignet sich insbesondere zur Anregung von niederfrequenten SH-Wellen. Die Spurwellenlänge dieses Wandlers wird durch die Periodizität der Magnetanordnung bestimmt. Die Schallabstrahlrichtung ist parallel zu den Stegen 6 und Nuten 5 der Kammstruktur orientiert.

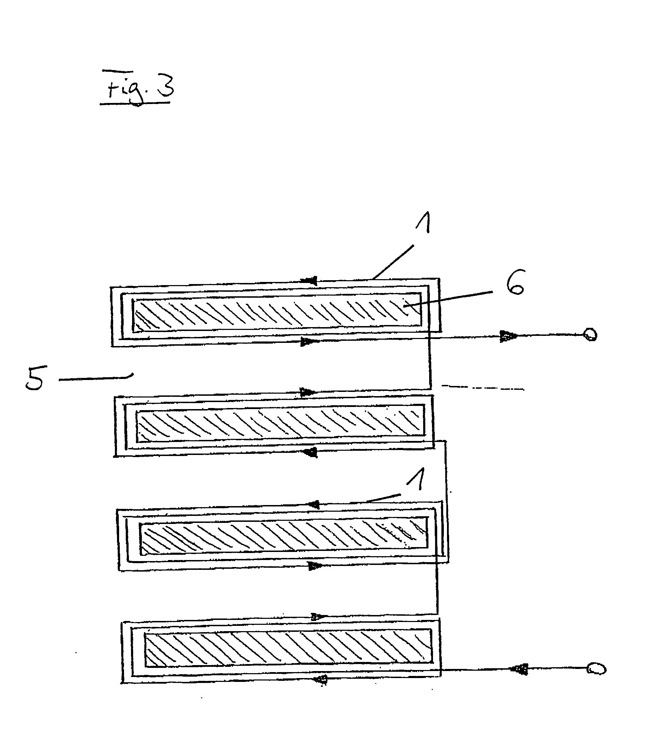

Fig. 3 zeigt das Wickelschema eines elektromagnetischen SH-Wellen-Wandlers wie dem der Fig. 2 nochmals schematisch bei senkrechter Draufsicht auf die Unterseite. In der Figur sind nur andeutungsweise die Stege 6, hier insgesamt vier Stege, mit den dazwischen liegenden Nuten 5 angedeutet. Wie aus der Figur ersichtlich ist, sind die einzelnen HF-Spulen 1 auf die Stege 6 aufgewickelt, wobei die Wicklungsrichtung von Steg zu Steg alterniert bzw. wechselt. Auf diese Weise ergibt sich durch die an die Nut 5 angrenzenden Spulenwicklungen eine Stromrichtung - in der Figur durch die Pfeile angedeutet - die von Nut zu Nut wechselt.

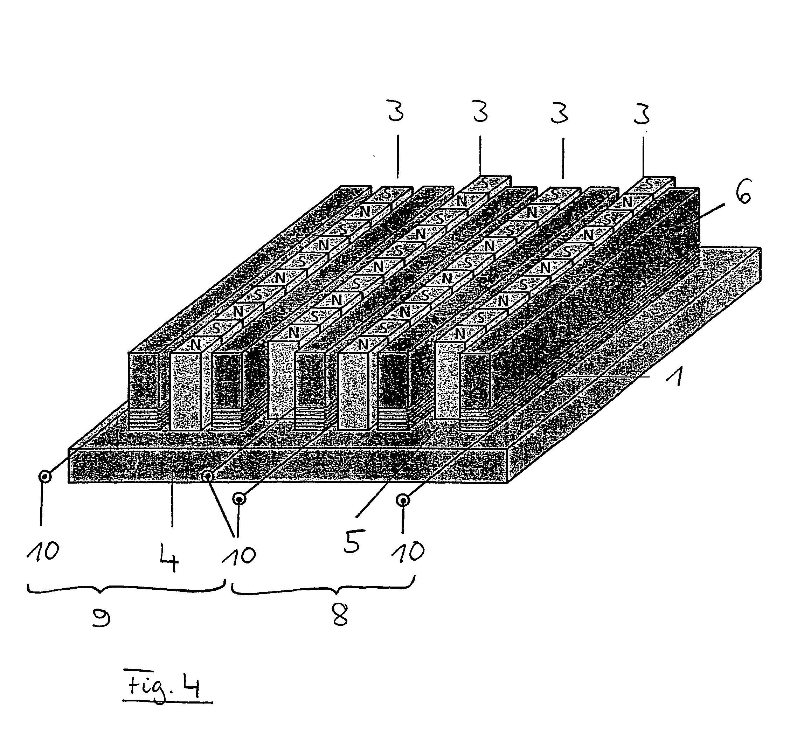

Fig. 4 zeigt ein weiteres Ausführungsbeispiel für einen elektromagnetischen Ultraschallwandler gemäß der vorliegenden Erfindung. Bei diesem Wandler ist der Spulenträger mit den Stegen 6 und Nuten 5 wieder in gleicher Weise ausgebildet wie bei der Ausführungsform der Fig. 2. Im Gegensatz zur Ausführungsform der Fig. 2 sind bei dem vorliegenden Wandler jedoch zwei getrennte Gruppen von HF-Spulen 1 auf dem Spulenträger 4 aufgewickelt. Die erste Gruppe von in Reihe elektrisch miteinander verschalteten HF-Spulen 1 - im Folgenden als erste HF-Spulenanordnung 8 bezeichnet - ist auf die in der Figur rechten drei Stege 6 aufgewickelt, wobei die Wicklungsrichtung der HF-Spulen 1 wiederum von Steg zu Steg alterniert. Eine weitere Gruppe von HF-Spulen 1 - im Folgenden als zweite HF-Spulenanordnung 9 bezeichnet - ist auf die linken drei Stege 6 in der gleichen Weise, d.h. mit alternierendem Wicklungssinn von Steg zu Steg, aufgewickelt. Um den mittleren Steg sind somit Wicklungen von beiden HF-Spulenanordnungen 8, 9 aufgebracht. Beide HF-Spulenanordnungen 8, 9 haben jeweils voneinander getrennte Anschlüsse 10, wie dies aus der Figur ersichtlich ist.

In den Nuten 5 zwischen den Stegen 6 sind wiederum Permanentmagnetreihen 3 mit alternierender Polbelegung angeordnet. In diesem Beispiel sind die Permanentmagnetreihen 3 von Nut zu Nut jedoch um jeweils eine halbe Magnetbreite gegeneinander versetzt, was einem Versatz um λ/4 der Spurwellenlänge entspricht. Der Versatz bezieht sich hierbei auf eine Linie senkrecht zu den Stegen 6 des Spulenträgers 4 bzw. senkrecht zu den Permanentmagnetreihen 3.

Bei Beaufschlagung der beiden HF-Spulenanordnungen 8, 9 mit um 90° versetzten Stromsignalen ergibt sich bei einem derartigen Wandler in Abstrahlrichtung eine Phasendifferenz der Signale um 180°, d.h. eine Auslöschung der Signale, und in der anderen Abstrahlrichtung eine konstruktive Überlagerung der erzeugten Ultraschallwellen. Auf diese Weise wird eine einseitige Schallabstrahlung des Ultraschallwellenwandlers erreicht.

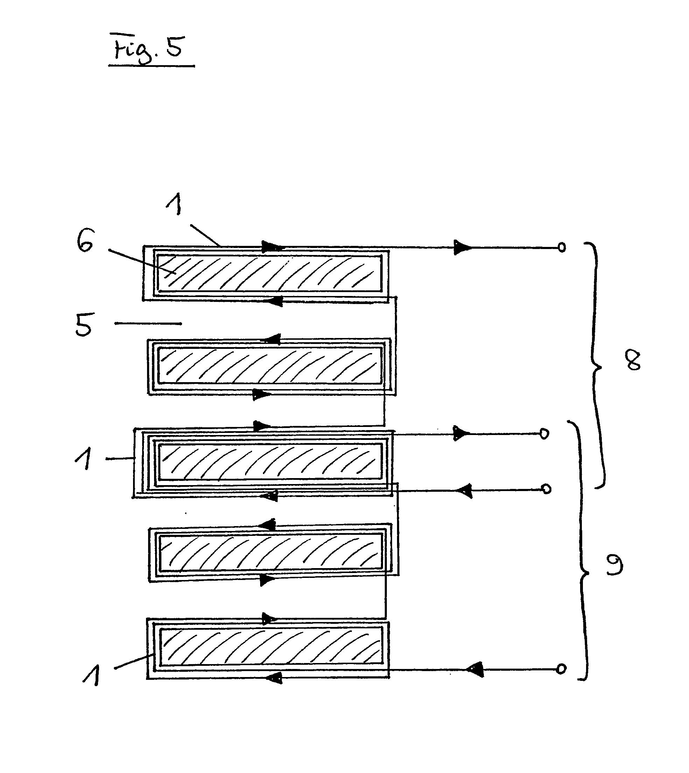

Fig. 5 zeigt hierbei wiederum in senkrechter Draufsicht auf die Unterseite eines Wandlers wie den der Fig. 4 den Verlauf der auf die Stege 6 aufgewickelten Spulenwicklungen mit der durch die Pfeile angedeuteten Stromrichtung.

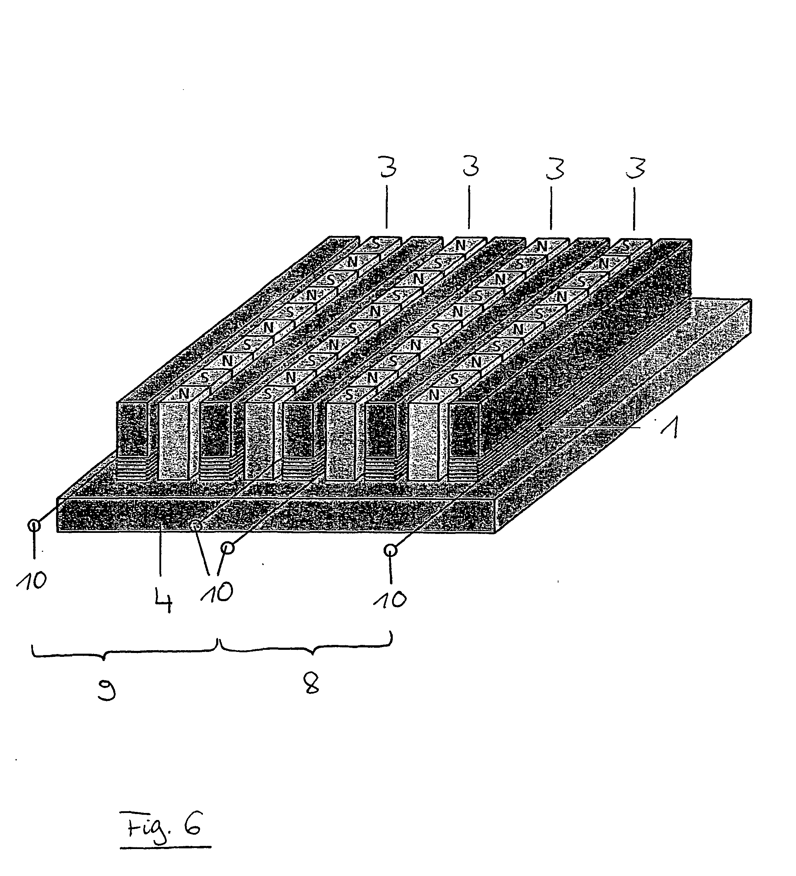

Fig. 6 zeigt ein weiteres Ausführungsbeispiel eines elektromagnetischen Ultraschallwandlers gemäß der vorliegenden Erfindung. Die Ausbildung des Spulenträgers 4 mit den Nuten 5 und Stegen 6 entspricht wiederum der der vorangehenden Ausführungsbeispiele. Auch in diesem Beispiel sind wie bei dem Ausführungsbeispiel der Fig. 4 zwei getrennt ansteuerbare HF-Spulenanordnungen 8 und 9 entsprechend der Beschreibung der Fig. 4 auf die Stege 6 aufgewickelt.

Bei dem vorliegenden Ausführungsbeispiel sind die Permanentmagnetreihen 3 alternierender Polbelegung derart innerhalb der Nuten 5 angeordnet, dass die Polbelegung in beiden Hälften, d.h. in den beiden rechten und den beiden linken Nuten 5 der Figur jeweils in einer Richtung senkrecht zu den Stegen 6 alterniert, in der Mitte des Spulenträgers 4 jedoch zwei benachbarte Permanentmagnetreihen 3 die gleiche Polbelegung aufweisen. Die einzelnen Permanentmagnetreihen 3 weisen hierbei im Gegensatz zur Ausführungsform der Fig. 4 keinerlei Versatz gegeneinander auf.

Ein derartiger Ultraschallwandler lässt sich als Empfangswandler in Differenztechnik betreiben. Hierzu wären beide HF-Spulenanordnungen 8, 9 an die Eingänge eines in der Figur nicht dargestellten Differenzverstärkers angeschlossen, wobei die Empfangssignale der Spulen aufgrund der beschriebenen Anordnung der Permanentmagnete eine Phasendifferenz von 180° aufweisen.

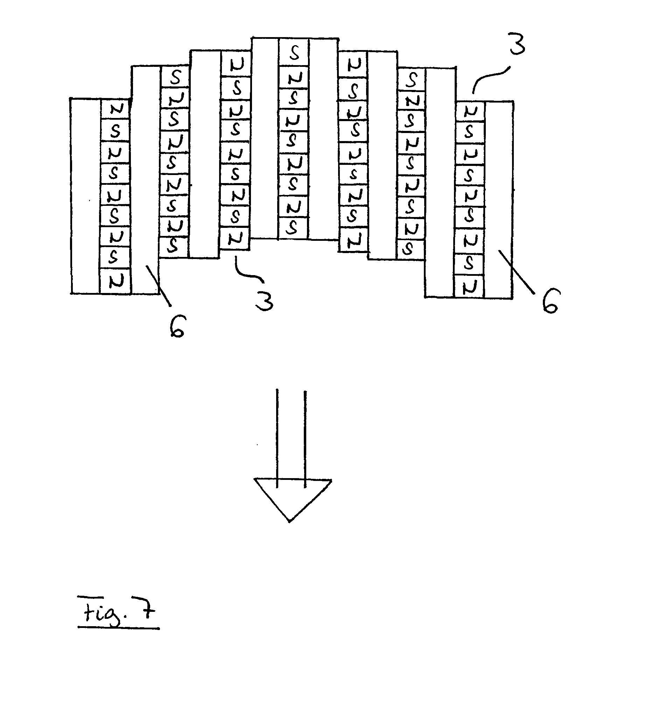

Fig. 7 zeigt in Draufsicht auf die Unterseite ein weiteres Ausführungsbeispiel eines elektromagnetischen Ultraschallwandlers gemäß der vorliegenden Erfindung. Die HF-Spulen sind in dieser Figur nicht dargestellt, können jedoch in gleicher Weise wie bei den vorangehend erläuterten Ausführungsbeispielen auf die Stege 6 aufgewickelt sein.

Bei dem vorliegenden Ausführungsbeispiel sind sowohl die Stege 6 als auch die Reihen 3 der Permanentmagnete 2 derart in Längsrichtung der Stege 6 gegeneinander versetzt angeordnet sind, dass deren Enden einem annähernd kreisabschnittsförmig gekrümmten Verlauf folgen bzw. auf einer entsprechenden kreisabschnittsförmig gekrümmten Linie liegen. Auf diese Weise wird eine Fokussierung der Ultraschallwellen in einer Ebene parallel zur Werkstückoberfläche im Werkstück erreicht. Die Fokussierung kann durch die Stärke der Krümmung gezielt beeinflusst werden. Die Polbelegung in einer Richtung senkrecht zur Längsrichtung der Stege kann hierbei wie bei dem Ausführungsbeispiel der Figur 4 ausgeführt sein, d.h. die Permanentmagnetreihen 3 sind von Nut zu Nut um jeweils eine halbe Magnetbreite gegeneinander versetzt, um eine einseitige in der durch den Pfeil angedeuteten Richtung zu erreichen.

Selbstverständlich lassen sich die in den Ausführungsbeispielen dargestellten Ultraschallwandler hinsichtlich der Zahl der Stege und Nuten und der damit zusammenhängenden HF-Spulen und Permanentmagnetreihen beliebig erweitern, soweit die Größe des daraus resultierenden Wandlers noch eine eindeutige Werkstückprüfung zulässt. Weiterhin lässt sich beispielsweise der Wandler der Fig. 2 auch mit einer geringeren Anzahl von Permanentmagnetreihen, beispielsweise zwei dieser Reihen, ausbilden.

Auch wenn in den vorliegenden Ausführungsbeispielen bevorzugte Dimensionen der Permanentmagnete, der Stege sowie der Nuten angegeben sind, so kann der Fachmann beim Bau eines derartigen Ultraschallwandlers selbstverständlich auch andere Dimensionen wählen, die für den beabsichtigten Einsatz geeignet sind.

### BEZUGSZEICHENLISTE

| | |
|---|---|
| 1 | HF-Spule |
| 2 | Permanentmagnet |
| 3 | Permanentmagnetreihe |
| 4 | Spulenträger |
| 5 | Nut |
| 6 | Steg |
| 7 | Grundplatte |
| 8 | Erste HF-Spulenanordnung |
| 9 | Zweite HF-Spulenanordnung |
| 10 | Elektrische Anschlüsse |
| 11 | Stirnseite der Stege |

## Patentansprüche

1. Elektromagnetischer Ultraschallwandler mit
- einem Spulenträger (4) aus einem magnetisch gut leitenden Material, der eine kammartige Struktur mit parallel verlaufenden Nuten (5) und Stegen (6) aufweist,
- mehreren in Reihe elektrisch miteinander verbundenen ersten HF-Spulen (1, 8), die beabstandet von einer durch Stirnseiten der Stege (6) gebildeten Abstrahlungsseite des Wandlers derart auf zumindest einige der Stege (6) aufgewickelt sind, dass benachbarte Spulen (1) einen alternierenden Wicklungssinn aufweisen, und
- Mitteln (2, 3) zur Erzeugung eines statischen Magnetfeldes,
**dadurch gekennzeichnet,**
**dass** die Mittel (2, 3) zur Erzeugung eines statischen Magnetfeldes durch mehrere Reihen (3) von Permanentmagneten (2) gebildet sind, die in den Nuten (5) des Wandlers in Längsrichtung der Stege (6) angeordnet sind und innerhalb der einzelnen Nuten (5) eine alternierende Polbelegung aufweisen.

2. Elektromagnetischer Ultraschallwandler nach Anspruch 1,
**dadurch gekennzeichnet,**
**dass** die Permanentmagnete (2) jeweils benachbarter Nuten (5) in einer Richtung senkrecht zur Längsrichtung der Stege (6) in der Polbelegung alternieren.

3. Elektromagnetischer Ultraschallwandler nach Anspruch 1,
**dadurch gekennzeichnet,**
**dass** die Permanentmagnete (2) jeweils benachbarter Nuten (5) um eine halbe Magnetbreite in Längsrichtung der Stege (6) gegeneinander verschoben angeordnet und mehrere weitere in Reihe elektrisch miteinander verbundene zweite HF-Spulen (1, 9) vorgesehen und in gleicher Weise wie die ersten HF-Spulen (1, 8) auf einige der Stege (6) aufgewickelt sind, wobei die ersten HF-Spulen (1, 8) jeweils um die erste Hälfte benachbarter Stege (6) und die zweiten HF-Spulen (1, 9) um die die erste Hälfte gegebenenfalls um einen Steg (6) überlappende zweite Hälfte benachbarter Stege (6) gewickelt sind, wobei die ersten HF-Spulen (1, 8) getrennt von den zweiten HF-Spulen (1, 9) ansteuerbar sind.

4. Elektromagnetischer Ultraschallwandler Anspruch 3,
**dadurch gekennzeichnet,**
**dass** zwei Hochfrequenzgeneratoren zur phasenversetzten Ansteuerung der ersten (1, 8) und zweiten HF-Spulen (1, 9) vorgesehen sind.

5. Elektromagnetischer Ultraschallwandler Anspruch 3,
**dadurch gekennzeichnet,**
**dass** zwei Vorverstärker mit Phasendifferenz angeschlossen sind, deren Ausgangssignale phasenrichtig aufaddiert werden.

6. Elektromagnetischer Ultraschallwandler nach Anspruch 1,
**dadurch gekennzeichnet,**
**dass** mehrere weitere in Reihe elektrisch miteinander verbundene zweite HF-Spulen (1, 9) vorgesehen und in gleicher Weise wie die ersten HF-Spulen (1, 8) auf einige der Stege (6) aufgewickelt sind, wobei die ersten HF-Spulen (1, 8) jeweils um die erste Hälfte benachbarter Stege (6) und die zweiten HF-Spulen (1, 9) um die die erste Hälfte gegebenenfalls um einen Steg (6) überlappende zweite Hälfte benachbarter Stege (6) gewickelt sind, wobei die ersten HF-Spulen (1, 8) getrennt von den zweiten HF-Spulen (1, 9) ansteuerbar sind, und dass die Permanentmagnete (2) jeweils benachbarter Nuten (5) zwischen den Stegen (6) der ersten Hälfte und zwischen den Stegen (6) der zweiten Hälfte in einer Richtung senkrecht zur Längsrichtung der Stege (6) alternieren, wobei die Permanentmagnete (2) am Übergang von der ersten in die zweite Hälfte in zwei benachbarten Nuten (5) in einer Richtung senkrecht zur Längsrichtung der Stege (6) die gleiche Polbelegung aufweisen.

7. Elektromagnetischer Ultraschallwandler nach Anspruch 6,
**dadurch gekennzeichnet,**
**dass** die ersten (1, 8) und zweiten HF-Spulen (1, 9) mit den beiden Eingängen eines Differenzverstärkers verbunden sind.

8. Elektromagnetischer Ultraschallwandler nach einem der Ansprüche 1 bis 7,
**dadurch gekennzeichnet,**
**dass** der Abstand der HF-Spulen (1) von der Abstrahlungsseite des Wandlers 6-8 mm beträgt.

9. Elektromagnetischer Ultraschallwandler nach einem der Ansprüche 1 bis 8,
**dadurch gekennzeichnet,**
**dass** auf den gleichen Spulenträger (4) sowohl HF-Spulen (1) für die Erzeugung als auch HF-Spulen (1) für den Empfang von Ultraschallwellen aufgewickelt sind.

10. Elektromagnetischer Ultraschallwandler nach einem der Ansprüche 1 bis 9,
**dadurch gekennzeichnet,**
**dass** die Reihen (3) der Permanentmagnete (2) derart in Längsrichtung der Stege (6) gegeneinander versetzt angeordnet sind, dass die Enden der Reihen (3) einem annähernd kreisabschnittsförmig gekrümmten Verlauf folgen.

11. Elektromagnetischer Ultraschallwandler nach einem der Ansprüche 1 bis 9,
**dadurch gekennzeichnet,**
**dass** sowohl die Stege (6) als auch die Reihen (3) der Permanentmagnete (2) derart in Längsrichtung der Stege (6) gegeneinander versetzt angeordnet sind, dass deren Enden einem annähernd kreisabschnittsförmig gekrümmten Verlauf folgen.

## Claims

1. An electromagnetic ultrasonic transducer having
- a coil support (4) which is made of a material having good magnetic conductivity and which is provided with a comb-like structure having parallel running channels (5) and fins (6),
- a plurality of first HF coils (1, 8) which are electrically interconnected in series and which are wound on at least some of said fins 6 at some distance from a radiation side of the transducer formed by the faces of said fins (6) in such a manner that adjacent coils (1) have an alternating direction of wind and
- means (2,3) for generating a static magnetic field,
wherein said means (2, 3) for generating a static magnetic field are formed by means of a plurality of rows (3) of permanent magnets (2) which are disposed in said channels (5) of said transducer in the longitudinal direction of said fins (6) and have in the individual channels (5) an alternating pole assignment.

2. An electromagnetic ultrasonic transducer according to claim 1,
wherein said permanent magnets (2) of said adjacent channels (5) in direction perpendicular to the longitudinal direction of the said fins alternate in pole assignment.

3. An electromagnetic ultrasonic transducer according to claim 1,
wherein said permanent magnets (2) of said adjacent channels (5) are disposed shifted toward each other half the width of a magnet in the longitudinal direction of said fins (6) and a plurality of additional second HF coils (1,9), which are electrically interconnected in series, are provided and are wound on some of said fins (6) in the same manner as said first HF coils (1, 8), with said first coils (1,8) being wound about the first half of said adjacent fins (6) and said second HF coils (1,9) being wound about the second half of said adjacent fins (6) overlapping of said first half of adjacent fins, if required, one said fin (6), with said first HF coils (1,8) being separately triggerable from said second HF coils (1, 9).

4. An electromagnetic ultrasonic transducer according to claim 3,
wherein two high-frequency generators are provided for phase-shifted triggering of said first (1,8) and said second HF coils (1, 9).

5. An electromagnetic ultrasonic transducer according to claim 3,
wherein two preamplifiers having phase difference, the output signals of which are added up in phase, are connected.

6. An electromagnetic ultrasonic transducer according to claim 1,
wherein a plurality of additional said HF coils (1,9), which are interconnected in series, are provided and are wound in the same manner as said first HF coils (1,8) on some of said fins (6), with said first HF coils (1,8) being wound about the first half of said adjacent fins (6) and said second HF coils (1,9) being wound about the second half of said adjacent fins (6) overlapping of said first half, if required, one said fin (6), with said first HF coils (1, 8) being separately triggerable from said second HF coils (1, 9), and wherein said permanent magnets (2) of adjacent channels (5) alternate between said fins (6) of said first half and between said fins (6) of said second half in one direction perpendicular to the longitudinal direction of said fins (6), with said permanent magnets (2) having the same pole assignment at the transition from said first to said second half in two adjacent channels (5) in one direction perpendicular to the longitudinal direction of said fins (6).

7. An electromagnetic ultrasonic transducer according to claim 6,
wherein said first HF coils (1,8) and said second HF coils (1,9) are connected to the two inputs of a differential amplifier.

8. An electromagnetic ultrasonic transducer according to one of the claims 1 to 7,
wherein the distance of said coils (1) from said radiation side of said transducer is 6-8mm.

9. An electromagnetic ultrasonic transducer according to one of the claims 1 to 8,
wherein both said HF coils (1) for generating ultrasonic waves and said HF coils (1) for receiving ultrasonic waves are wound on the same said coil supports (4).

10. An electromagnetic ultrasonic transducer according to one of the claims 1 to 9,
wherein said rows (3) of permanent magnets (2) are disposed staggered in the longitudinal direction of said fins (6) in such a manner that the ends of said rows (3) follow an almost sectional circular curved course.

11. An electromagnetic ultrasonic transducer according to one of the claims 1 to 9,
wherein both said fins (6) and said rows (3) of said permanent magnets (2) are disposed staggered in the longitudinal direction of said fins (6) in such a manner that their ends follow an almost sectional circular curved course.

## Revendications

1. Transducteur ultrasonique électromagnétique comprenant :
- un porte-bobines (4) en un matériau bon conducteur magnétique, qui présente une structure en peigne avec des rainures (5) et des entretoises (6) parallèles,
- plusieurs premières bobines HF (1, 8) mutuellement reliées électriquement en série, qui sont enroulées sur au moins certaines des entretoises (6) en étant distantes d'une face de rayonnement du transducteur, constituée par des faces frontales des entretoises (6), de telle sorte que des bobines (1) voisines présentent une alternance de sens d'enroulement, et
- des moyens (2, 3) pour engendrer un champ magnétique statique,
**caractérisé en ce**
**que** les moyens (2, 3) pour engendrer un champ magnétique statique sont constitués par plusieurs rangées (3) d'aimants permanents (2), qui sont disposées dans les rainures (5) du transducteur selon la direction longitudinale des entretoises (6) et présentent à l'intérieur des rainures individuelles (5) une alternance dans l'affectation de polarité.

2. Transducteur ultrasonique électromagnétique selon la revendication 1,
**caractérisé en ce**
**que** les aimants permanents (2) des rainures (5) chaque fois voisines présentent une alternance dans l'affectation de polarité, dans une direction perpendiculaire à la direction longitudinale des entretoises (6).

3. Transducteur ultrasonique électromagnétique selon la revendication 1,
**caractérisé en ce**
**que** les aimants permanents (2) des rainures (5) chaque fois voisines sont en disposition mutuelle décalée d'une demie largeur d'aimant selon la direction longitudinale des entretoises (6), en ce que plusieurs autres secondes bobines HF (1, 9) mutuellement reliées électriquement en série, sont prévues et sont enroulées sur certaines des entretoises (6), de la même manière que les premières bobines HF (1, 8), lesdites premières bobines HF (1, 8) étant enroulées chaque fois autour de la première moitié d'entretoises (6) voisines et lesdites secondes bobines HF (1, 9) étant enroulées autour de la seconde moitié d'entretoises (6) voisines qui vient éventuellement en chevauchement autour d'une entretoise (6), sur ladite première moitié, lesdites premières bobines HF (1, 8) étant excitables ou activables séparément desdites secondes bobines HF (1, 9).

4. Transducteur ultrasonique électromagnétique selon la revendication 3,
**caractérisé en ce**
**que** deux générateurs hautes fréquences sont prévus en vue de l'excitation, avec décalage de phases, des premières (1, 8) et des secondes bobines HF (1, 9).

5. Transducteur ultrasonique électromagnétique selon la revendication 3,
**caractérisé en ce**
**que** sont raccordés deux préamplificateurs avec différence de phase, dont les signaux de sortie s'ajoutent l'un à l'autre, en concordance de phase.

6. Transducteur ultrasonique électromagnétique selon la revendication 1,
**caractérisé en ce**
**que** plusieurs autres secondes bobines HF (1, 9) mutuellement reliées électriquement en série sont prévues et sont enroulées sur certaines des entretoises (6), de la même manière que les premières bobines HF (1, 8), lesdites premières bobines HF (1, 8) étant enroulées chaque fois autour de la première moitié d'entretoises (6) voisines et lesdites secondes bobines HF (1, 9) étant enroulées autour de la seconde moitié d'entretoises (6) voisines, qui vient éventuellement en chevauchement, autour d'une entretoise (6), sur ladite première moitié, lesdites premières bobines HF (1, 8) étant excitables ou activables séparément desdites secondes bobines HF (1, 9), et en ce que les aimants permanents (2) des rainures (5) chaque fois voisines, situées entre les entretoises (6) de la première moitié et entre les entretoises (6) de la seconde moitié, présentent une alternance de sens dans une direction perpendiculaire à la direction longitudinale des entretoises (6), lesdits aimants permanents (2) présentant la même affectation de polarité au niveau du passage entre la première et la seconde moitiés, situées dans deux rainures (5) voisines, selon une direction perpendiculaire à la direction longitudinale des entretoises (6).

7. Transducteur ultrasonique électromagnétique selon la revendication 6,
**caractérisé en ce**
**que** les premières (1, 8) et secondes bobines HF (1, 9) sont reliées aux deux bornes d'un amplificateur différentiel.

8. Transducteur ultrasonique électromagnétique selon l'une des revendications 1 à 7,
**caractérisé en ce**
**que** la distance des bobines HF (1) par rapport à la face de rayonnement du transducteur s'élève à 6-8 mm.

9. Transducteur ultrasonique électromagnétique selon l'une des revendications 1 à 8,
**caractérisé en ce**
**que** sur le même porte- bobines (4) sont enroulées aussi bien des bobines HF (1) pour la génération ou production d'ondes ultrasonores qu'également des bobines HF (1) pour la réception d'ondes ultrasonores.

10. Transducteur ultrasonique électromagnétique selon l'une des revendications 1 à 9,
**caractérisé en ce**
**que** les rangées (3) d'aimants permanents (2) sont en disposition antagoniste décalée selon la direction longitudinale des entretoises (6) de telle sorte que les extrémités des rangées (3) suivent un tracé courbe sensiblement en forme d'arc de cercle.

11. Transducteur ultrasonique électromagnétique selon l'une des revendications 1 à 9,
**caractérisé en ce**
**qu'**aussi bien les entretoises (6) qu'également les rangées (3) d'aimants permanents (2) sont en disposition antagoniste décalée selon la direction longitudinale des entretoises (6), de telle sorte que leurs extrémités suivent un tracé courbe sensiblement en forme d'arc de cercle.
